# FASCICULE DE BREVET EUROPEEN

(11) **EP 4 339 098 B1**
(45) Date de publication et mention de la délivrance du brevet: **02.07.2025**
(21) Numéro de dépôt: 23195577.4
(22) Date de dépôt: 06.09.2023
(51) Int. Cl.: B64C 25/40, F16H 1/28

(54) **DISPOSITIF D'ENTRAINEMENT D'AU MOINS UNE ROUE D'UN TRAIN D'ATTERRISSAGE D'AERONEF**
ANTRIEBSVORRICHTUNG FÜR MINDESTENS EIN RAD EINES FLUGZEUGFAHRWERKS
DEVICE FOR DRIVING AT LEAST ONE WHEEL OF AN AIRCRAFT LANDING GEAR

(30) Priorité: 16.09.2022 FR 2209343
(43) Date de publication de la demande: 20.03.2024
(73) Titulaire: Safran Transmission Systems, 92700 Colombes (FR)
(72) Inventeur: FERNANDEZ, Maxime, 77550 MOISSY-CRAMAYEL (FR); DOUY, Yohan, 77550 MOISSY-CRAMAYEL (FR); FRANCOIS, Loïc, 77550 MOISSY-CRAMAYEL (FR); MORELLI, Boris Pierre Marcel, 77550 MOISSY-CRAMAYEL (FR); PELTIER, Jordane Emile André, 77550 MOISSY-CRAMAYEL (FR)
(74) Mandataire: Gevers & Orès

(56) Documents cités:
- WO-A1-2016/202909
- FR-A1- 3 116 095
- US-A1- 2019 291 575

## Description

### Domaine technique de l'invention

La présente invention concerne un dispositif d'entraînement d'au moins une roue d'un train d'atterrissage d'aéronef.

### Arrière-plan technique

L'arrière-plan technique comprend notamment les documents US-A1-2019/291575, WO-A1-2016/202909 et FR-A1-3 116 095. En particulier, le document US-A1-2019/291575 divulgue dans les Fig. 1 et 6 un dispositif avec une roue de train d'atterrissage, un moteur électrique et un système de transmission mécanique comprenant un réducteur avec un solaire, une couronne mobile et des satellites portés par un porte satellite.

Un aéronef comprend des trains d'atterrissage équipés de roues pour les déplacements de l'aéronef au sol sur un tarmac. Ce roulage aussi appelé taxiage (de l'anglais taxiing) peut être obtenu en propulsant l'aéronef grâce à ses turbomachines.

Pour limiter la consommation de carburant et l'impact sur l'environnement, il est connu de réaliser ce taxiage de manière électrique. Le taxiage électrique est obtenu en entraînant les roues d'un train d'atterrissage par un moteur électrique.

La présente demande propose un perfectionnement aux technologies existantes et concerne ainsi un dispositif à moteur électrique pour l'entraînement d'au moins une roue d'un train d'atterrissage d'aéronef. Une solution consistant à utiliser un réducteur pour transmettre la puissance d'un moteur électrique à une roue d'un train d'atterrissage a été proposée par la Demanderesse dans le document EP-A1-3 882 136.

Le rôle d'un réducteur mécanique est de modifier le rapport de vitesse et de couple entre l'axe d'entrée et l'axe de sortie d'un système mécanique.

Dans le domaine éloigné des turbomachines d'aéronef, il est connu d'utiliser un réducteur mécanique pour assurer une transmission de puissance entre deux arbres mécaniques rotatifs.

Il existe de nombreux types de réducteurs par exemple différentiels, planétaires, épicycloïdaux, à lignes intermédiaires, à étages de réduction en série, etc.

Dans l'état de l'art des turbomachines à double flux, les réducteurs sont de type planétaire ou épicycloïdal. Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal de la turbomachine. Les satellites ont chacun un axe de révolution différents équirépartis sur le même diamètre de fonctionnement autour de l'axe des planétaires. Ces axes sont parallèles à l'axe longitudinal de la turbomachine.

Il existe plusieurs architectures de réducteur. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent être composés d'un ou plusieurs étages d'engrènement. Cet engrènement est assuré de différentes façons comme par contact, par friction ou encore par champs magnétique.

Dans la présente demande, on entend par « étage » ou « denture », au moins une série de dents d'engrènement avec au moins une série de dents complémentaires. Une denture peut être interne ou externe.

Un satellite peut comprendre un ou deux étages d'engrènement. Un satellite à simple étage comprend une denture qui peut être droite, hélicoïdale ou en chevron et dont les dents sont situées sur un même diamètre. Cette denture coopère à la fois avec le solaire et la couronne.

Un satellite à double étage comprend deux dentures qui sont situées sur des diamètres différents. Une première denture coopère avec le solaire et une seconde denture coopère en général avec la couronne.

Un réducteur à double étage d'engrènement présente l'avantage d'avoir un rapport de réduction plus important qu'un réducteur à simple étage d'engrènement de même encombrement.

Dans le cadre d'un dispositif d'entraînement d'au moins une roue d'un train d'atterrissage, l'utilisation d'un moteur électrique et d'un réducteur pour l'entraînement de la roue génère de fortes contraintes d'encombrement. Le diamètre extérieur du réducteur est limité par la dimension de la jante de la roue, et le diamètre intérieur du réducteur est fortement contraint par le diamètre du moyeu de la roue. De plus, l'utilisation d'un moteur électrique tournant généralement à des vitesses élevées nécessite l'utilisation d'un réducteur proposant un grand rapport de réduction afin de proposer une vitesse de sortie qui correspond à la faible vitesse de rotation de la roue. Les trains de type épicycloïdal et planétaire de la technique actuelle ne permettent pas d'obtenir ces niveaux de réduction dans un encombrement aussi restreint.

L'invention propose une solution à au moins une partie de ces problèmes, qui est simple, efficace et économique.

### Résumé de l'invention

L'invention concerne un dispositif d'entraînement d'au moins une roue d'un train d'atterrissage d'aéronef, ce dispositif comportant :
- au moins une roue de train d'atterrissage, cette roue comportant une jante ayant un axe de rotation,
- un moteur électrique comportant un arbre,
- un système de transmission mécanique entre l'arbre du moteur et la jante, ce système de transmission mécanique comprenant un réducteur mécanique,
caractérisé en ce que le réducteur mécanique comporte :
- un solaire solidaire en rotation de l'arbre du moteur, ce solaire étant centré sur l'axe et comportant une denture externe
- une couronne fixe centrée sur l'axe et qui comporte une denture interne, cette couronne fixe étant configurée pour être fixée à un stator du dispositif,
- une couronne mobile centrée sur l'axe et qui comporte une denture interne, cette couronne mobile étant solidaire en rotation de la jante, et
- des satellites qui sont engrenés avec le solaire, les satellites étant portés par un porte-satellites mobile en rotation autour de l'axe, chacun des satellites comportant deux dentures externes engrenés respectivement avec les dentures des couronnes fixe et mobile.

L'invention propose ainsi un dispositif d'entraînement d'au moins une roue d'un train d'atterrissage d'aéronef, qui est équipé d'un réducteur à double couronne indépendante et ayant des fonctions différentes. L'une des couronnes est fixe et l'autre des couronnes est mobile en rotation. On comprend donc que la couronne mobile forme une sortie (de couple) du réducteur, l'entrée du réducteur étant formée par le solaire. Le porte-satellites est mobile également en rotation. Il peut être libre en rotation et donc indépendant de tout rotor du moteur électrique.

L'invention est compatible d'un réducteur à plusieurs étages comme évoqué dans ce qui précède. Elle est également compatible d'un réducteur dont le porte-satellites est mobile en rotation comme les réducteurs épicycloïdal ou différentiel. Elle est également compatible avec des dentures de n'importe quel type (droites, hélicoïdales, chevrons, etc.). L'invention est en outre compatible avec un porte-satellites de type monobloc ou de type cage et porte-cage. Ces différents types de réducteur étant bien connus de l'homme du métier. La solution proposée ci-dessous est compatible de tout type de palier satellite, qu'il soit composé d'éléments roulants, d'un palier hydrodynamique, etc.

Le dispositif selon l'invention peut comprendre une ou plusieurs des caractéristiques suivantes, prises isolément les unes des autres, ou en combinaison les unes avec les autres :
- chacun des satellites est engrené par une première denture avec la denture du solaire et la denture de la couronne fixe, et par une seconde denture avec la denture de la couronne mobile ;
- chacun des satellites est engrené par une première denture avec la denture du solaire et la denture de la couronne mobile, et par une seconde denture avec la denture de la couronne fixe ;
- les satellites sont chacun centrés et guidés par deux paliers à rouleaux portés par le porte-satellites, les dentures de chacun des satellites étant situées entre ces paliers à rouleaux ;
- les satellites sont chacun centrés et guidés par deux paliers à aiguilles portés par le porte-satellites, chacun des paliers à aiguilles étant aligné radialement avec une des dentures du satellite ;
   -- le solaire est accouplé à un arbre ou solidaire d'un arbre,
- les satellites sont disposés autour d'au moins une partie de cet arbre ou dudit arbre du moteur ;
- les dentures des couronnes fixe et mobile ont un même diamètre ;
- les dentures des couronnes fixe et mobile ont des nombres de dents différents ;
- toutes les dentures sont choisies parmi des dentures droites, hélicoïdales ou en chevrons ;
- le moteur a une forme annulaire centré sur l'axe et est disposé à côté du réducteur ;
- le moteur est disposé à côté et radialement vis-à-vis de l'axe de rotation au niveau des satellites ;
- les dentures de chacun des satellites ont des diamètres différents, la denture de plus petit diamètre de chacun des satellites engrenant avec la denture de la couronne mobile, et la denture de plus petit diamètre de chacun des satellites engrenant avec la denture de la couronne fixe ;
- le moteur électrique est disposé du côté de la couronne fixe et du côté opposé à la couronne mobile ; et
- le porte satellites est disposé du côté du moteur électrique.

### Brève description des figures

D'autres caractéristiques et avantages ressortiront de la description qui suit d'un mode de réalisation non limitatif de l'invention en référence aux dessins annexés sur lesquels :
[Fig.1] la figure 1 est une vue schématique en perspective d'une roue d'un train d'atterrissage d'aéronef et d'un dispositif d'entraînement de cette roue,
[Fig.2] la figure 2 est une vue partielle en coupe axiale d'un réducteur mécanique,
[Fig.3] la figure 3 est une autre vue partielle en coupe axiale d'un réducteur mécanique,
[Fig.4] la figure 4 est une vue schématique en coupe axiale et en perspective d'un réducteur à double étage d'engrènement symétrique,
[Fig.5] la figure 5 est une autre vue schématique en coupe axiale du réducteur de la figure 4 ;
[Fig.6] la figure 6 est une vue très schématique partielle en coupe axiale d'un réducteur pour un dispositif selon un mode de réalisation de l'invention,
[Fig.7] la figure 7 est vue similaire à celle de la figure 6 et illustre une variante de réalisation du dispositif ;
[Fig.8] la figure 8 est une vue similaire à celle de la figure 6 et illustre une autre variante de réalisation du dispositif ;
[Fig.9] la figure 9 est une vue schématique partielle en coupe axiale d'un réducteur selon la variante de la figure 8 ;
[Fig.10] la figure 10 est une vue schématique partielle en perspective d'un réducteur selon la variante de la figure 7 ;
[Fig.11] la figure 11 est une vue schématique partielle en coupe axiale du réducteur selon la variante de la figure 7 ;
[Fig.12] la figure 12 est une vue schématique partielle en perspective d'une variante de réalisation du réducteur ;
[Fig.13] la figure 13 est vue schématique en coupe axiale d'un satellite et de paliers de guidage de ce satellite ; et
[Fig.14] la figure 14 est vue schématique en coupe axiale d'un satellite et de paliers de guidage de ce satellite.

### Description détaillée de l'invention

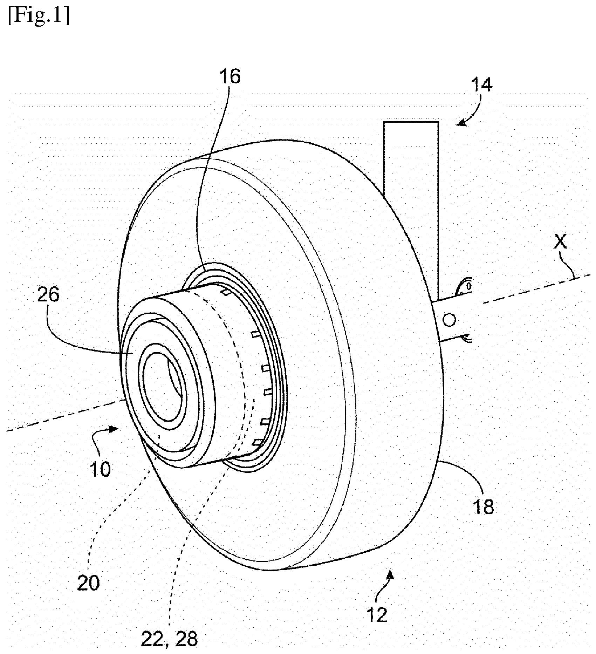

La figure 1 montre un dispositif 10 d'entraînement d'au moins une roue 12 d'un train d'atterrissage 14 d'aéronef.

La roue 12 comporte une jante 16 qui a un axe de rotation X. De manière classique, cette jante 16 a une forme générale tubulaire ou de disque et porte à sa périphérie un pneu 18.

Le dispositif 10 comprend un moteur électrique 20 et un système de transmission mécanique 22 entre un arbre du moteur 20 et la jante 16 de la roue 12.

Dans l'exemple représenté, le moteur 20 et le système 22 ont chacun une forme générale annulaire et sont centrés sur l'axe X. Ils sont disposés à côté l'un de l'autre et le système 22 est installé entre le moteur 20 et la jante 16. Une partie du système 22, voire également une partie du moteur 20, pourraient être logées dans la jante 16 pour optimiser l'encombrement du dispositif 10. Le moteur 20 et le système 22 peuvent être protégés par un capot cylindrique extérieur 26 en saillie sur un côté de la jante 16 ou du pneu 18.

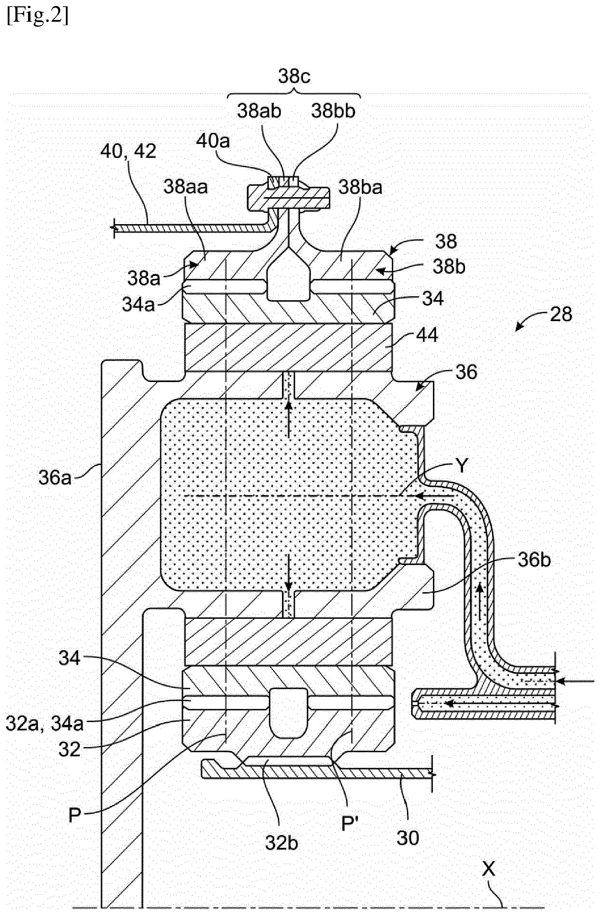

Le système de transmission mécanique 22 comprend un réducteur mécanique 28 dont des exemples de réalisation sont illustrés aux figures 2 à 5.

La figure 2 montre un réducteur épicycloïdal 28. En entrée, le réducteur 28 est relié à un arbre 30, par exemple par l'intermédiaire de cannelures internes 32a. Ainsi, l'arbre 30 entraîne un pignon planétaire appelé le solaire 32. Classiquement, le solaire 32 entraîne une série de pignons appelés satellites 34, qui sont équirépartis sur le même diamètre autour de l'axe X de rotation du solaire 32. Ce diamètre est égal au double de l'entraxe de fonctionnement entre le solaire 32 et les satellites 34. Le nombre de satellites 34 est généralement défini entre trois et sept.

L'ensemble des satellites 34 est maintenu par un châssis appelé porte-satellites 36. Chaque satellite 34 tourne autour de son propre axe Y, et engrène avec une couronne 38.

En sortie nous avons :
▪ Dans cette configuration épicycloïdale, l'ensemble des satellites 34 entraine en rotation le porte-satellite 36 autour de l'axe X. La couronne 38 est fixée à un stator via un porte-couronne 40 et le porte-satellites 36 est fixé à autre arbre 42.
▪ Dans une autre configuration planétaire, l'ensemble des satellites 34 est maintenu par un porte-satellites 36 qui est fixé à un stator. Chaque satellite entraine la couronne 38 qui est reliée à l'arbre 42 via un porte-couronne 40.
▪ Dans une autre configuration différentielle, l'ensemble des satellites 34 est maintenu par un porte-satellites 36 qui est relié à l'arbre 30. Chaque satellite 34 entraine la couronne 38 qui est rapportée à l'arbre 42 via un porte-couronne 40.

Chaque satellite 34 est monté libre en rotation à l'aide d'un palier 44, par exemple de type roulement ou palier hydrodynamique. Chaque palier 44 est monté sur un des axes 36b du porte-satellites 36 et tous les axes 36b sont positionnés les uns par rapport aux autres à l'aide d'un ou plusieurs châssis structurels 36a du porte-satellites 36. Il existe un nombre d'axes 36b et de paliers 44 égal au nombre de satellites 34. Pour des raisons de fonctionnement, de montage, de fabrication, de contrôle, de réparation ou de rechange, les axes 36b et le châssis 36a peuvent être séparés en plusieurs pièces.

Pour les mêmes raisons citées précédemment, la denture 34a d'un satellite 34 peut être séparée en plusieurs hélices ou dents présentant chacun un plan médian P, P'. Dans l'exemple représenté, chaque satellite 34 comprend deux séries de dents en chevron coopérant avec une couronne 38 séparée en deux demi-couronnes :
▪ Un anneau amont 38a constituée d'une jante 38aa et d'une demi-bride de fixation 38ab. Sur la jante 38aa se trouve l'hélice avant engrenée avec une hélice de la denture 34a de chaque satellite 34. L'hélice de la denture 34a engrène également avec celle du solaire 32.
▪ Un anneau aval 38b constituée d'une jante 38ba et d'une demi-bride de fixation 38bb. Sur la jante 38ba se trouve l'hélice arrière engrenée avec une hélice de la denture 34a de chaque satellite 34. L'hélice de la denture 34a engrène également avec celle du solaire 32.

Si les largeurs d'hélice varient entre le solaire 32, les satellites 34 et la couronne 38 à cause des recouvrements de denture, elles sont toutes centrées sur un plan médian P pour les dents amont et sur un autre plan médian P' pour les dents aval.

La figure 2 illustre ainsi le cas d'un réducteur à simple étage d'engrènement, c'est-à-dire qu'une même denture 34a de chaque satellite 34 coopère à la fois avec le solaire 32 et la couronne 38. Même si la denture 34a comprend deux séries de dents, ces dents ont le même diamètre moyen et forment une seule et même denture appelée chevron.

La demi-bride de fixation 38ab de l'anneau amont 38a et la demi-bride de fixation 38bb de l'anneau aval 38b forment la bride de fixation 38c de la couronne. La couronne 38 est fixée au porte-couronne 40 en assemblant la bride de fixation 38c de la couronne 38 et une bride de fixation 40a du porte-couronne 40 à l'aide d'un montage boulonné par exemple.

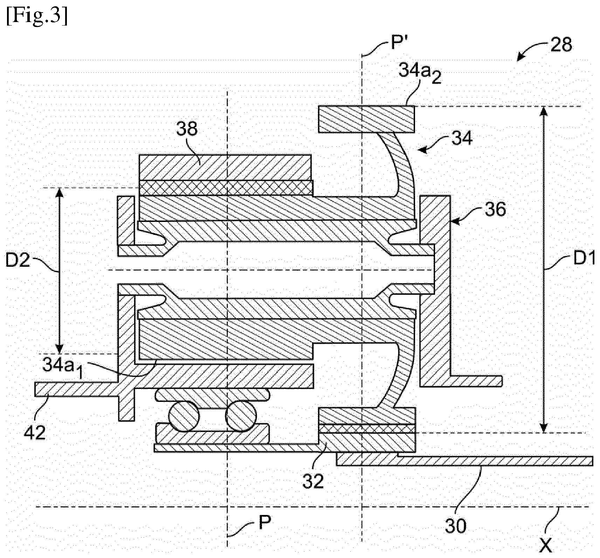

La figure 3 montre un autre exemple d'architecture de réducteur, dit à double étage d'engrènement, dans lequel chaque satellite 34 comprend deux dentures 34a1, 34a2 distinctes configurées pour coopérer respectivement avec la couronne 38 et le solaire 32.

Dans cette figure 3, les éléments déjà décrits dans ce qui précède sont désignés par les mêmes références.

La denture 34a1 d'engrènement avec la couronne 38 un diamètre moyen noté D2 et est situé dans un plan médian P. La denture 34a2 d'engrènement avec le solaire 32 a un diamètre moyen noté D1 et est situé dans un autre plan médian P'. Les plans médians P, P' sont parallèles entre eux et perpendiculaires à l'axe X. Le diamètre D2 est inférieur au diamètre D1. Enfin, chaque denture 34a1, 34a2 comprend ici une seule hélice.

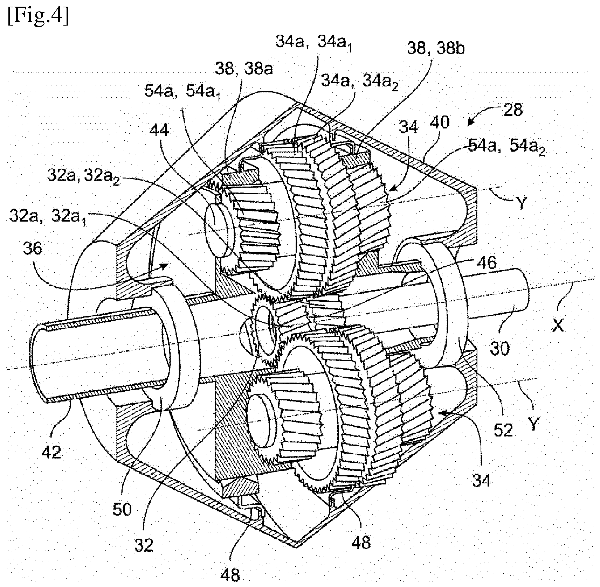

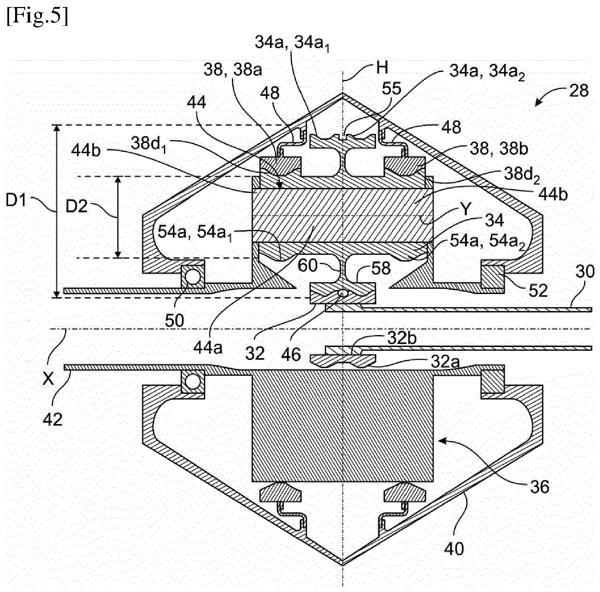

Les figures 4 et 5 montrent un réducteur 28 à double denture symétrique, qui comprend :
- un solaire 32 ayant un axe de rotation X,
- une couronne 38 qui s'étend autour du solaire 32 et qui est configurée pour être immobile en rotation autour de l'axe X, et
- des satellites 34 qui sont engrenés avec le solaire 32 et la couronne 38 et qui sont maintenus par un porte-satellites 36 qui est configuré pour être mobile en rotation autour de l'axe X.

On définit le plan H comme étant un plan médian perpendiculaire à l'axe X et passant sensiblement au milieu du réducteur 28 (figure 5).

Le solaire 32 comprend des cannelures internes 32b d'accouplement avec l'arbre 30 ainsi qu'une denture externe 32a d'engrènement avec les satellites 34. La denture 32a présente deux séries de dents adjacentes en chevron, séparées l'une de l'autre par une rainure annulaire 46 orientée radialement vers l'extérieur. La denture 32a est symétrique par rapport au plan H, ses dents étant situées de part et d'autre du plan H qui passe par la rainure 46.

La couronne 38 est formée par deux anneaux indépendants 38a, 38b et comprend une denture qui est séparée en deux séries de dents 38d1, 38d2 en chevron portées respectivement par les deux anneaux.

Les anneaux 38a, 38b sont disposés de manière symétrique par rapport au plan H qui s'étend donc entre ces anneaux. Les anneaux 38a, 38b sont reliés et fixés à un porte-couronne 40 par l'intermédiaire de flasques annulaires 48 de liaison. Les flasques 48 sont indépendants l'un de l'autre, chaque flasque ayant en demi section axiale une forme générale en S lui procurant une certaine souplesse radiale par déformation élastique en fonctionnement. Chaque anneau 38a, 38b s'étend autour de l'axe X et est fixé au flasque 48 correspondant par sa périphérie externe. Sa périphérie interne comprend une des dents 38d1, 38d2.

Le porte-couronne 40 a une forme générale annulaire autour de l'axe X et plus particulièrement biconique. Il comprend ainsi un premier tronçon amont ou à gauche sur le dessin, avec une extrémité amont de plus petit diamètre, et une extrémité aval de plus grand diamètre qui est reliée à l'extrémité amont de plus grand diamètre de l'autre tronçon, aval ou à droite sur le dessin. Les extrémités de plus grand diamètre des tronçons sont donc reliées entre elles, et leurs extrémités de plus petits diamètres forment les extrémités axiales du porte-couronne 40.

L'extrémité amont du porte-couronne 40 s'étend autour du porte-satellites 36 ou d'un arbre 42 relié à ce porte-satellites, et est centré et guidé en rotation sur le porte-satellite ou l'arbre par l'intermédiaire d'au moins un palier 50. De la même façon, l'extrémité aval du porte-couronne 40 s'étend autour du porte-satellites 36 ou d'un arbre relié à ce porte-satellites, et est centré et guidé en rotation sur le porte-satellite ou l'arbre par l'intermédiaire d'au moins un autre palier 52.

Comme c'est le cas de la couronne 38, le porte-couronne 40 présente une symétrie par rapport au plan H qui coupe le porte-couronne 40 en son milieu et passe donc par les extrémités de plus grand diamètre des tronçons précités.

Chaque satellite 34 comporte une première denture 34a de diamètre moyen D1 pour l'engrènement avec le solaire 32, et une seconde denture 54aa de diamètre moyen D2, différent de D1 et en particulier inférieur à D1, pour l'engrènement avec la couronne 38. Les diamètres moyens sont mesurés depuis l'axe Y de chaque satellite 34 et représente la moyenne entre le diamètre maximal et le diamètre minimal d'une denture de ce satellite.

Chaque satellite 34 comprend un manchon cylindrique 58 et un voile annulaire 60 s'étendant sensiblement radialement vers l'extérieur depuis le milieu de ce manchon 58. La denture 54aa est séparée en deux séries de dents 54a1, 54a2 en chevron qui sont situées respectivement sur les extrémités axiales du manchon 58. La denture 34aa comprend deux séries de dents 34a1, 34a2 en chevron qui sont situées à la périphérie externe du voile 60 et qui sont séparées l'une de l'autre par une rainure annulaire 55 débouchant radialement vers l'extérieur par rapport à l'axe Y.

La denture 34aa est traversée en son milieu par le plan H qui passe par la rainure 55, les dents 34a1, 34a2 étant donc disposées de part et d'autre du plan H. Les dents 54a1, 54a2 sont également disposées de manière symétrique par rapport au plan H.

La denture 34aa et la périphérie externe du voile 60 ont une dimension axiale qui est inférieure à la distance axiale entre les anneaux 38a, 38b, ainsi qu'entre les flasques 48, de façon à ce que chaque satellite 34 puisse librement tourner dans le porte-couronne 40 et entre les anneaux 38a, 38b et les flasques 48.

Chacun des satellites 34 est guidé en rotation par un palier hydrodynamique 44 qui comprend un corps cylindrique 44a qui traverse le satellite 34, et en particulier son manchon 58, et qui est configuré pour former un film d'huile de guidage à l'intérieur du satellite.

Le corps 44a d'un palier 44 s'étend le long de l'axe Y et comprend à ses extrémités longitudinales des extensions 44b logées dans des orifices formant des sièges du porte-satellites 36.

Le corps 44a est en général tubulaire et comprend un alésage interne de circulation d'huile qui communique en général avec des conduits d'amenée d'huile jusqu'à une surface cylindrique externe du corps en vue de la formation du film d'huile entre cette surface et une surface cylindrique interne du satellite 34.

La présente invention propose dans un encombrement réduit d'augmenter le rapport de réduction d'un réducteur mécanique dans le cadre d'un dispositif 10 d'entraînement d'au moins une roue d'un train d'atterrissage d'aéronef, tel qu'illustré à la figure 1.

Le réducteur 28 du dispositif 10 selon l'invention comprend l'ensemble des caractéristiques décrites dans ce qui précède en relation avec les figures 3, 4 et 5 dans la mesure où elles ne sont pas contraires ou ne contredisent pas ce qui suit.

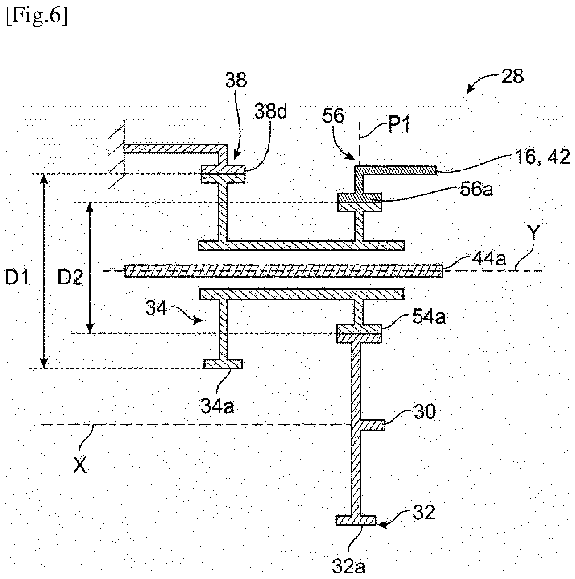

Les références utilisées dans les figures 6 et suivantes et déjà utilisées dans les figures 3, 4 et 5 désignent donc des éléments identiques ou similaires.

Les figures 6 à 8 illustrent des modes de réalisation d'un réducteur 28 selon l'invention, qui comprend :
- un solaire 32 qui est mobile en rotation autour de l'axe X et qui comporte une denture externe 32a,
- une couronne 38 fixe qui s'étend autour de l'axe X et qui comporte une denture interne 38d, cette couronne fixe étant configurée pour être fixée à un stator du dispositif 10,
- une couronne 56 mobile qui s'étend autour de l'axe X et qui comporte une denture interne 56a, cette couronne 56 mobile étant indépendante de la couronne 38 fixe, et
- des satellites 34 qui sont engrenés avec le solaire 32 et les couronnes 38 et 56, les satellites étant portés par un porte-satellites non représenté qui est mobile en rotation autour de l'axe X, et.

Dans le cadre de la présente invention, le solaire 32 est accouplé avec l'arbre 30 du moteur électrique 20. La couronne 56 mobile est accouplée à l'arbre 42 de la jante ou à la jante 16 directement.

Chacun des satellites 34 est engrené avec le solaire 32 et les couronnes 38, 56 et comprend une première denture externe 34a de diamètre moyen D1, et une seconde denture externe 54a de diamètre moyen D2, différent de D1.

Dans l'exemple représenté, D1 est supérieur à D2. En variante, les dentures 34a et 54a pourraient avoir des diamètres D1 et D2 égaux et des nombres de dents différents, de façon à avoir modules différents.

La référence 44a désigne le corps cylindrique 44a du palier hydrodynamique de guidage de chaque satellite 34, comme évoqué dans ce qui précède.

Dans le mode de réalisation de la figure 6, la denture 54a de diamètre D2 de chaque satellite 34 est engrenée avec la denture 32a du solaire 32 et la denture 56a de la couronne 56 mobile. Les dentures 32a, 54a et 56a sont ainsi dans un même plan P1 perpendiculaire à l'axe X. La denture 34a de diamètre D1 de chaque satellite 34 est engrenée avec la denture 38d de la couronne 38 fixe.

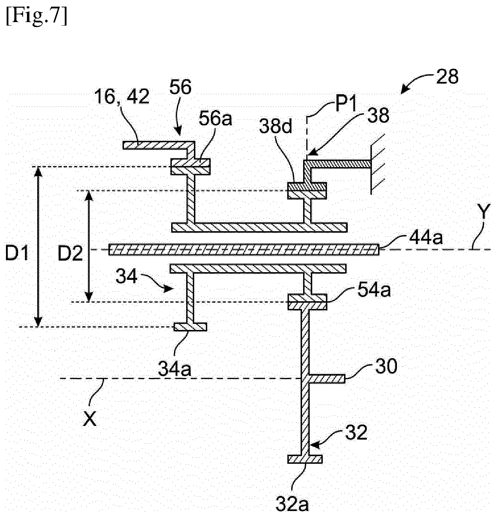

Dans le mode de réalisation de la figure 7, la denture 34a de diamètre D1 de chaque satellite 34 est engrenée avec la denture 56a de la couronne 56 mobile. La denture 54a de diamètre D2 de chaque satellite 34 est engrenée avec la denture 32a du solaire 32 et la denture 38d de la couronne 38 fixe. Les dentures 32a, 54a et 38d sont ainsi dans un même plan P1 perpendiculaire à l'axe X.

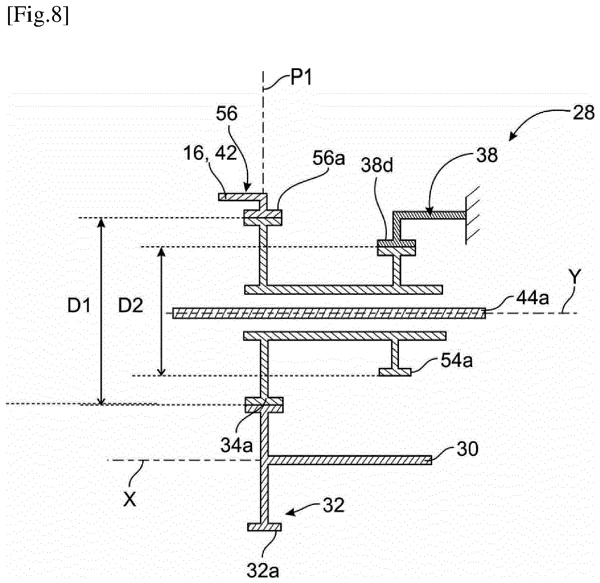

Dans le mode de réalisation de la figure 8, la denture 34a de diamètre D1 de chaque satellite 34 est engrenée avec la denture 56a de la couronne 56 mobile et avec la denture 32a du solaire 32. Les dentures 32a, 34a et 56a sont ainsi dans un même plan P1 perpendiculaire à l'axe X. La denture 54a de diamètre D2 de chaque satellite 34 est engrenée avec la denture 38d de la couronne 38 fixe.

Dans les configurations des figures 6 et 8 où le solaire 32 et la couronne 56 mobile engrènent les mêmes dentures des satellites 34, on peut dire que la sortie (de couple) du réducteur est alignée avec son entrée. Dans la configuration de la figure 7 où le solaire 32 et la couronne 56 mobile engrènent des dentures différentes des satellites 34, on peut dire que la sortie (de couple) du réducteur est opposée à son entrée.

Le nombre de dents de la couronne 56 mobile est différent du nombre de dents de la couronne 38 fixe de façon à avoir des diamètres différents sur les deux couronnes. En variante, les diamètres peuvent être égaux à condition d'avoir des modules différents sur les deux couronnes. Le sens de rotation de la couronne 56 mobile peut dépendre du diamètre relatif des deux couronnes 38, 56. À titre d'exemple, lorsque le nombre de dents de la couronne 56 mobile est supérieur à celui de la couronne 38 fixe, le réducteur 28 est contra-rotatif, c'est-à-dire que la couronne 56 mobile tournent en sens inverse du solaire 32. Lorsque le nombre de dents de la couronne 56 mobile est inférieur à celui de la couronne 38 fixe, le réducteur 28 est co-rotatif, c'est-à-dire que la couronne 56 et le solaire 32 tournent dans le même sens.

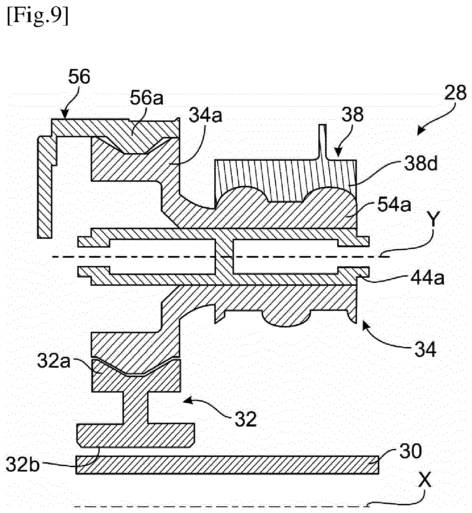

La figure 9 illustre partiellement et de manière plus concrète le mode de réalisation du réducteur 28 de la figure 8.

La référence 30 désigne l'arbre dont une extrémité comprend des cannelures complémentaires des cannelures 32b du solaire 32. La figure 9 permet de voir que les satellites 34 sont disposés autour de l'arbre 30 ou d'une partie de cet arbre. C'est notamment le cas lorsque la couronne 38 fixe est située en aval de la couronne 56 mobile. Comme l'arbre 30 provient de l'aval du moteur électrique, il est accouplé aux dentures 34a amont des satellites 34 et les dentures 54a de ces satellites sont situées autour de l'arbre 30.

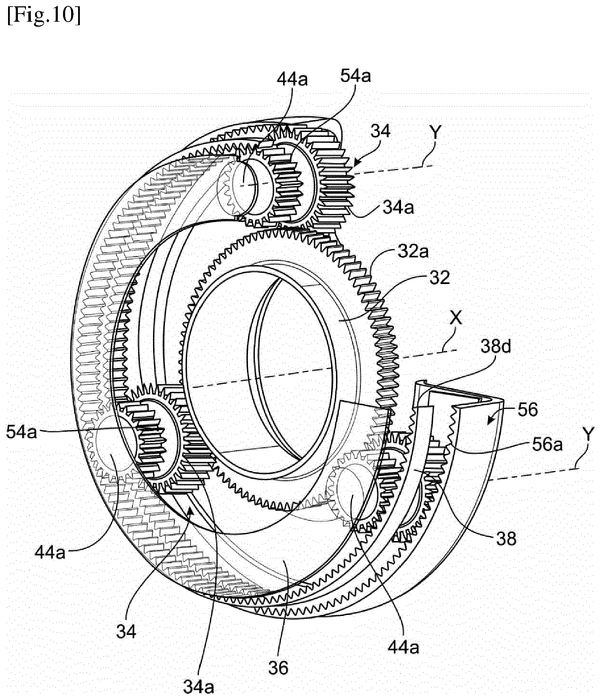

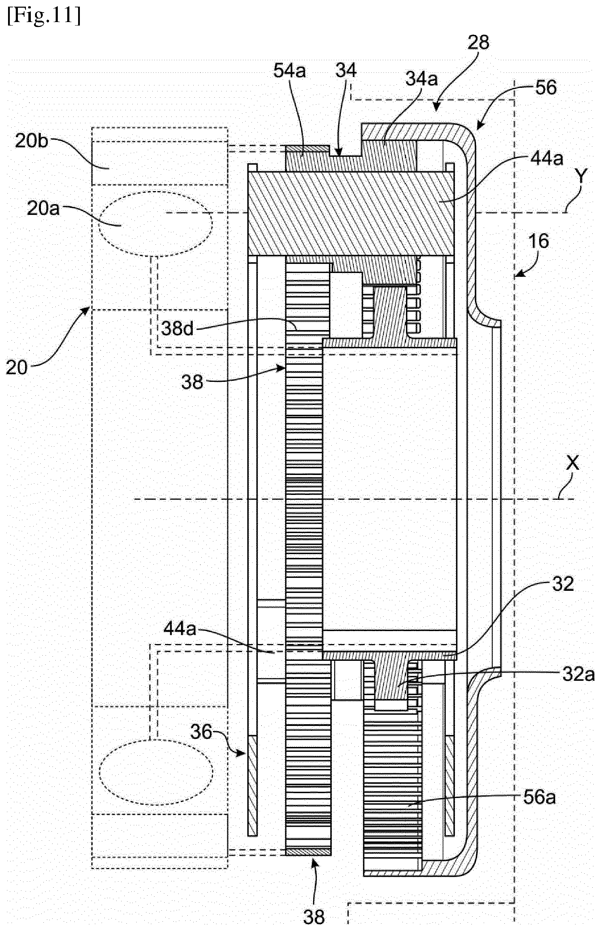

Les figures 10 et 11 illustrent également partiellement et de manière plus concrète le mode de réalisation du réducteur 28 de la figure 8.

La référence 36 désigne le porte-satellites qui porte les corps cylindriques 44a des paliers hydrodynamiques des satellites 34.

Dans les modes de réalisation des figures 8 à 11, D1 est inférieur à D2. Le nombre de satellites 34 du réducteur des figures 10 et 11 est égal à trois.

La figure 11 montre en outre la position du moteur 20 (représenté en traits pointillés) à côté du réducteur 28. Le moteur 20 a une forme annulaire et est disposé à côté des satellites 34. Les satellites 34 et le moteur 20 sont ainsi situés sur des circonférences de même diamètre ou diamètres proches. Les références 20a et 20b désignent respectivement le rotor et le stator du moteur 20, tous les deux annulaires. Le stator 20b est relié à la couronne fixe 38 et le rotor 20a est relié au solaire 32.

La jante 16 est représentée en traits pointillés et le réducteur 28 est au moins en partie logée axialement dans la jante 16.

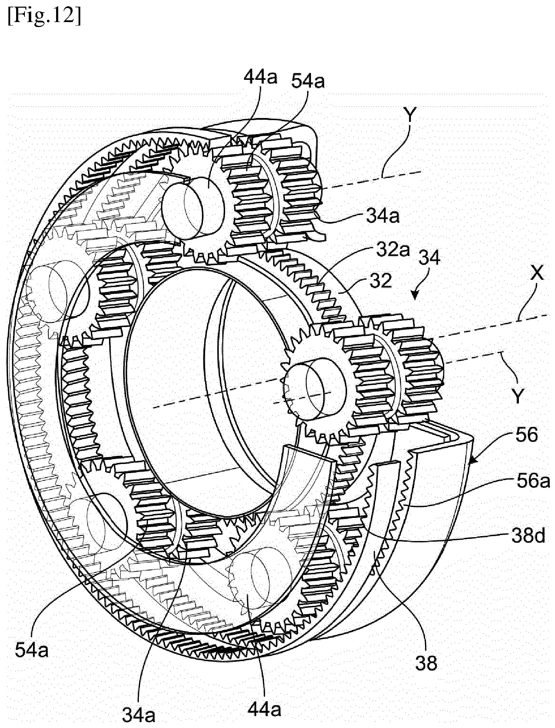

Dans la variante de réalisation de la figure 12, les diamètres des dentures 34a, 54a des satellites 34 sont différents et le nombre de satellites 34 est égal à cinq.

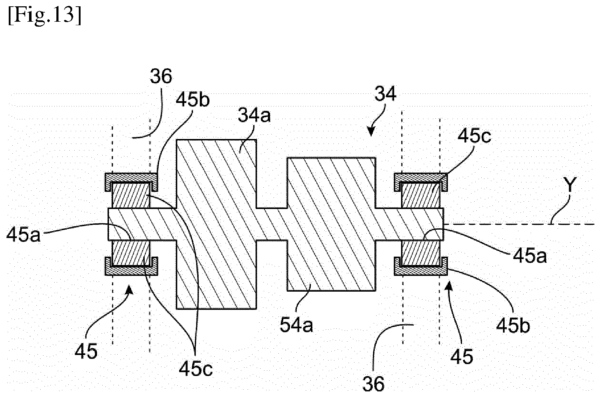

La figure 13 montre un autre exemple de guidage des satellites 34 du réducteur 28. Les satellites 34 sont guidés par des paliers 45 à roulement qui sont ici plus particulièrement des paliers à rouleaux. Les paliers 45 de guidage de chaque satellite 34 sont au nombre de deux et sont montés autour des extrémités longitudinales de ce satellite, entre ces extrémités et le porte-satellites 36. Chacun des paliers 45 comprend une bague interne 45a portée par le satellite 34 ou intégrée à ce dernier, et une bague externe 45b portée par le porte-satellites 36. Les rouleaux 45c sont montés entre les bagues 45a, 45b.

On constate dans la figure 13 que les dentures 34a, 54a des satellites sont situées entre les paliers 45. Ce montage permet d'équilibrer au mieux les moments appliqués sur les satellites 34 par les engrènements.

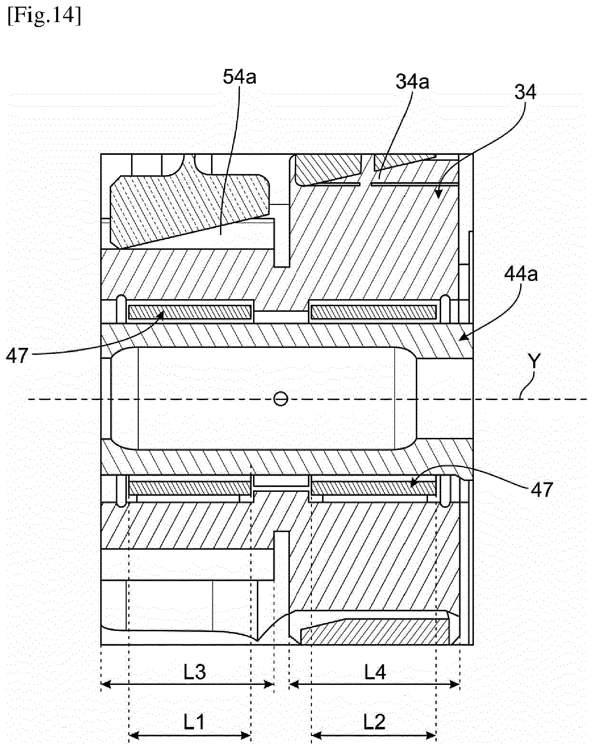

En variante et comme représenté à la figure 14, les satellites 34 sont guidés par des paliers 47 à aiguilles. Ces paliers 47 sont au nombre de deux et sont montés radialement entre les satellites 34 et les corps 44a. Chacun des paliers 47 est aligné radialement avec une des dentures 34a, 54a du satellite 34. Ce montage permet de réduire l'encombrement axial.

Chacun des paliers 47 peut avoir une longueur ou dimension axiale L1, L2 mesurée le long de l'axe Y, qui représente au moins 80% de la longueur ou dimension axiale L3, L4 de la denture 34a, 54a correspondante.

## Revendications

1. Dispositif (10) d'entraînement d'au moins une roue (12) pour un train d'atterrissage (14) d'aéronef, ce dispositif (10) comportant :
- au moins une roue (12) de train d'atterrissage, cette roue (12) comportant une jante (16) ayant un axe de rotation (X),
- un moteur (20) électrique comportant un arbre,
- un système de transmission mécanique (22) entre l'arbre du moteur (20) et la jante (16), ce système de transmission mécanique (22) comprenant un réducteur mécanique (28),
où le réducteur mécanique (28) comporte :
- un solaire (32) solidaire en rotation de l'arbre du moteur (20), ce solaire (32) étant centré sur l'axe (X) et comportant une denture externe (32a),
- une couronne fixe (38) centrée sur l'axe (X) et qui comporte une denture interne (38d), cette couronne fixe (38) étant configurée pour être fixée à un stator du dispositif (10),
- une couronne mobile (56) centrée sur l'axe (X) et qui comporte une denture interne (56a), cette couronne mobile (56) étant solidaire en rotation de la jante (16), et
- des satellites (34) qui sont engrenés avec le solaire (32), les satellites (34) étant portés par un porte-satellites (36) mobile en rotation autour de l'axe (X), chacun des satellites (34) comportant deux dentures externes (34a, 54a) engrenés respectivement avec les dentures (38d, 56a) des couronnes fixe (38) et mobile (56).

2. Dispositif (10) selon la revendication 1, dans lequel les satellites (34) sont chacun centrés et guidés par :
- deux paliers à rouleaux (45) portés par le porte-satellites (36), les dentures (34a, 54a) de chacun des satellites (34) étant situées entre ces paliers à rouleaux (45),
- ou deux paliers à aiguilles (47) portés par le porte-satellites (36), chacun des paliers à aiguilles (47) étant aligné radialement avec une des dentures (34a, 54a) du satellite (34).

3. Dispositif (10) selon l'une des revendications précédentes, dans lequel les dentures (38d, 56a) des couronnes fixe et mobile (38, 56) ont un même diamètre.

4. Dispositif (10) selon l'une des revendications précédentes, dans lequel les dentures (38d, 56a) des couronnes fixe et mobile (38, 56) ont des nombres de dents différents.

5. Dispositif (10) selon l'une des revendications précédentes, dans lequel toutes les dentures (32a, 34a, 54a, 38d, 56a) sont choisies parmi des dentures, droites, hélicoïdales ou en chevrons.

6. Dispositif (10) selon l'une des revendications précédentes, dans lequel le moteur (20) a une forme annulaire centré sur l'axe (X) et est disposé à côté du réducteur (28).

7. Dispositif (10) selon l'une des revendications précédentes, dans lequel le moteur (20) est disposé à côté et radialement vis-à-vis de l'axe de rotation (X) au niveau des satellites (34).

8. Dispositif (10) selon l'une des revendications précédentes, dans lequel les dentures (34a, 54a) de chacun des satellites (34) ont des diamètres différents, la denture de plus petit diamètre de chacun des satellites (34) engrenant avec la denture (56a) de la couronne mobile (56), et la denture de plus petit diamètre de chacun des satellites (34) engrenant avec la denture (38d) de la couronne fixe (38).

9. Dispositif (10) selon l'une des revendications précédentes, dans lequel le moteur électrique (20) est disposé du côté de la couronne fixe (38) et du côté opposé à la couronne mobile (56).

10. Dispositif (10) selon l'une des revendications précédentes, dans lequel le porte satellites (36) est disposé du côté du moteur électrique (20).

11. Dispositif (10) selon l'une des revendications 1 à 10, dans lequel chacun des satellites (34) est engrené par une première denture avec la denture du solaire (32) et la denture de la couronne fixe (38), et par une seconde denture avec la denture de la couronne mobile (56).

12. Dispositif (10) selon l'une des revendications 1 à 10, dans lequel chacun des satellites (34) est engrené par une première denture avec la denture du solaire (32) et la denture de la couronne mobile (56), et par une seconde denture avec la denture de la couronne fixe (38).

13. Dispositif (10) selon l'une des revendications précédentes, dans lequel les satellites (34) sont disposés autour d'au moins une partie dudit arbre du moteur (20).

## Patentansprüche

1. Vorrichtung (10) zum Antrieb mindestens eines Rades (12) für ein Fahrwerk (14) eines Luftfahrzeugs, wobei diese Vorrichtung (10) umfasst:
- mindestens ein Rad (12) des Fahrwerks, wobei dieses Rad (12) eine Felge (16), die eine Drehachse (X) aufweist, umfasst,
- einen Elektromotor (20), der eine Welle umfasst,
- ein mechanisches Kraftübertragungssystem (22) zwischen der Welle des Motors (20) und der Felge (16), wobei dieses mechanische Kraftübertragungssystem (22) ein mechanisches Untersetzungsgetriebe (28) umfasst, wobei das mechanische Untersetzungsgetriebe (28) umfasst:
- ein Sonnenrad (32), das drehfest mit der Welle des Motors (20) verbunden ist, wobei dieses Sonnenrad (32) auf der Achse (X) zentriert ist und eine äußere Verzahnung (32a) aufweist,
- eine festen Krone (38), der auf der Achse (X) zentriert ist und eine innere Zahnung (38d) umfasst, wobei diese feste Krone (38) konfiguriert ist, an einem Stator der Vorrichtung (10) befestigt zu werden,
- eine beweglichen Krone (56), der auf der Achse (X) zentriert ist und eine innere Verzahnung (56a) umfasst, wobei diese bewegliche Krone (56) mit der Felge (16) drehfest verbunden ist, und
- Planeten (34), die mit dem Sonnenrad (32) in Eingriff stehen, wobei die Planeten (34) von einem Planetenträger (36) getragen werden, der um die Achse (X) drehbeweglich ist,
wobei jeder der Planeten (34) zwei äußere Verzahnungen (34a, 54a) aufweist, die jeweils mit den Verzahnungen (38d, 56a) der festen (38) und der beweglichen (56) Krone in Eingriff stehen.

2. Vorrichtung (10) nach Anspruch 1, wobei die Planeten (34) jeweils zentriert und geführt werden durch:
- zwei Rollenlager (45), die von dem Planetenträger (36) getragen werden, wobei die Verzahnungen (34a, 54a) jedes der Planetenräder (34) zwischen diesen Rollenlagern (45) angeordnet sind,
- oder zwei Nadellager (47), die von dem Planetenträger (36) getragen werden, wobei jedes der Nadellager (47) radial mit einer der Verzahnungen (34a, 54a) des Planeten (34) ausgerichtet ist.

3. Vorrichtung (10) nach einem der vorstehenden Ansprüche, wobei die Verzahnungen (38d, 56a) der festen und der beweglichen Krone (38, 56) denselben Durchmesser aufweisen.

4. Vorrichtung (10) nach einem der vorstehenden Ansprüche, wobei die Verzahnungen (38d, 56a) der festen und der beweglichen Krone (38, 56) unterschiedliche Anzahlen von Zähnen aufweisen.

5. Vorrichtung (10) nach einem der vorstehenden Ansprüche, wobei alle Verzahnungen (32a, 34a, 54a, 38d, 56a) aus geraden, schneckenförmigen oder zickzackförmigen Verzahnungen ausgewählt sind.

6. Vorrichtung (10) nach einem der vorstehenden Ansprüche, wobei der Motor (20) eine Ringform aufweist, die auf der Achse (X) zentriert ist, und neben dem Untersetzungsgetriebe (28) angeordnet ist.

7. Vorrichtung (10) nach einem der vorstehenden Ansprüche, wobei der Motor (20) neben und radial gegenüber der Drehachse (X) im Bereich der Planeten (34) angeordnet ist.

8. Vorrichtung (10) nach einem der vorstehenden Ansprüche, wobei die Verzahnungen (34a, 54a) jedes der Planeten (34) unterschiedliche Durchmesser aufweisen, wobei die Verzahnung mit dem kleineren Durchmesser jedes der Planeten (34) mit der Verzahnung (56a) der beweglichen Krone (56) kämmt und die Verzahnung mit dem kleineren Durchmesser jedes der Planeten (34) mit der Verzahnung (38d) der festen Krone (38) kämmt.

9. Vorrichtung (10) nach einem der vorstehenden Ansprüche, wobei der Elektromotor (20) auf der Seite der festen Krone (38) und auf der Seite gegenüber der beweglichen Krone (56) angeordnet ist.

10. Vorrichtung (10) nach einem der vorstehenden Ansprüche, wobei der Planetenträger (36) auf der Seite des Elektromotors (20) angeordnet ist.

11. Vorrichtung (10) nach einem der Ansprüche 1 bis 10, wobei jeder der Planeten (34) über eine erste Verzahnung mit der Verzahnung des Sonnenrads (32) und der Verzahnung der festen Krone (38) und über eine zweite Verzahnung mit der Verzahnung der beweglichen Krone (56) in Eingriff steht.

12. Vorrichtung (10) nach einem der Ansprüche 1 bis 10, wobei jeder der Planeten (34) über eine erste Verzahnung mit der Verzahnung des Sonnenrads (32) und der Verzahnung de beweglichen Krone (56) und über eine zweite Verzahnung mit der Verzahnung der festen Krone (38) in Eingriff steht.

13. Vorrichtung (10) nach einem der vorstehenden Ansprüche, wobei die Planeten (34) um mindestens einen Teil der Welle des Motors (20) herum angeordnet sind.

## Claims

1. A device (10) for driving at least one wheel (12) for an aircraft landing gear (14), this device (10) comprising:
- at least one landing gear wheel (12), this wheel (12) comprising a rim (16) having an axis of rotation (X),
- an electric motor (20) comprising a shaft,
- a mechanical transmission system (22) for mechanical transmission between the shaft of the motor (20) and the rim (16), this mechanical transmission system (22) comprising a mechanical reduction gear (28),
wherein the mechanical reduction gear (28) comprises:
- a sun gear (32) secured in rotation to the shaft of the motor (20), this sun gear (32) being centred on the axis (X) and comprising an external toothing (32a),
- a stationary ring gear (38) centred on the axis (X) and which comprises an internal toothing (38d), this stationary ring gear (38) being configured to be secured to a stator of the device (10),
- a movable ring gear (56) centred on the axis (X) and that comprises an internal toothing (56a), this movable ring gear (56) being secured in rotation to the rim (16), and
- planet gears (34) which are meshed with the sun gear (32), the planet gears (34) being carried by a planet carrier (36) which is mobile in rotation about the axis (X), each of the planet gears (34) comprising two external toothing (34a, 54a) meshed respectively with the toothing (38d, 56a) of the stationary (38) and movable (56) ring gears.

2. The device (10) according to claim 1, wherein the planet gears (34) are each centred and guided by:
- two roller bearings (45) carried by the planet carrier (36), the toothing (34a, 54a) of each of the planet gears (34) being located between these roller bearings (45),
- or two needle bearings (47) carried by the planet carrier (36), each of the needle bearings (47) being radially aligned with one of the toothing (34a, 54a) of the planet gear (34).

3. The device (10) according to one of the preceding claims, wherein the toothing (38d, 56a) of the stationary and movable ring gear (38, 56) have the same diameter.

4. The device (10) according to one of the preceding claims, wherein the toothing (38d, 56a) of the stationary and movable ring gears (38, 56) have different numbers of teeth.

5. The device (10) according to one of the preceding claims, wherein all the toothing (32a, 34a, 54a, 38d, 56a) are selected from straight, helical or herringbone toothings.

6. The device (10) according to one of the preceding claims, wherein the motor (20) has an annular shape centred on the axis (X) and is arranged next to the reduction gear (28).

7. The device (10) according to one of the preceding claims, wherein the motor (20) is arranged alongside and radially opposite the axis of rotation (X) at the level of the planet gears (34).

8. The device (10) according to one of the preceding claims, wherein the toothings (34a, 54a) of each of the planet gears (34) have different diameters, the smallest diameter toothing of each of the planet gears (34) meshing with the toothing (56a) of the movable ring gear (56), and the smallest diameter toothing of each of the planet gears (34) meshing with the toothing (38d) of the stationary ring gear (38).

9. The device (10) according to one of the preceding claims, wherein the electric motor (20) is arranged on the side of the stationary ring gear (38) and on the opposite side to the movable ring gear (56).

10. The device (10) according to one of the preceding claims, wherein the planet carrier (36) is arranged on the side of the electric motor (20).

11. The device (10) according to one of claims 1 to 10, wherein each of the planet gears (34) is meshed by a first toothing with the toothing of the sun gear (32) and the toothing of the stationary ring gear (38), and by a second toothing with the toothing of the movable ring gear (56).

12. The device (10) according to one of claims 1 to 10, wherein each of the planet gears (34) is meshed by a first toothing with the toothing of the sun gear (32) and the toothing of the movable ring gear (56), and by a second toothing with the toothing of the stationary ring gear (38).

13. The device (10) according to one of the preceding claims, wherein the planet gears (34) are arranged around at least part of said shaft of the motor (20).
